# EUROPÄISCHE PATENTSCHRIFT

(11) **EP 2 899 072 B1**
(45) Veröffentlichungstag und Bekanntmachung des Hinweises auf die Patenterteilung: **14.08.2019**
(21) Anmeldenummer: 15000188.1
(22) Anmeldetag: 23.01.2015
(51) Int. Cl.: B60R 13/08, F02B 77/11, F16L 59/02, B32B 17/00, E04B 1/74

(54) **Isoliervorrichtung und Verfahren zu deren Herstellung**
Insulating device and method for its manufacture
Dispositif d'isolation et son procédé de fabrication

(30) Priorität: 24.01.2014 DE 102014000761; 30.05.2014 DE 102014007741; 23.12.2014 DE 102014019228
(43) Veröffentlichungstag der Anmeldung: 29.07.2015
(73) Patentinhaber: BDD Beteiligungs GmbH, 68169 Mannheim (DE)
(72) Erfinder: Cappellucci, Peter, 68199 Mannheim (DE); Frueh, Jochen, 69469 Weinheim (DE)
(74) Vertreter: Wesch, Arno

(56) Entgegenhaltungen:
- EP-A1- 0 428 786
- EP-A1- 0 466 754
- EP-A1- 1 510 408
- WO-A1-2005/105526
- WO-A1-2012/041823
- DE-A1- 3 437 337
- DE-U1- 20 309 151

## Beschreibung

Die Erfindung bezieht sich auf eine Anordnung mit einer Isoliervorrichtung gemäß den im Oberbegriff des Patentanspruchs 1 angegebenen Merkmalen. Ferner bezieht sich die Erfindung auf ein Verfahren zur Herstellung der Isoliervorrichtung.

Aus der EP 2 088 293 B1 und DE 20 2011 108 468 U1 ist eine derartige Isoliervorrichtung sowie deren Herstellverfahren bekannt, wobei das Bauteil insbesondere als Abgasrohr oder Krümmer einer Verbrennungsmaschine bzw. eines Motors ausgebildet ist und von einem heißen Medium, nämlich Abgas, durchströmbar ist. Das Bauteil ist zwecks thermischer und / oder akustischer Dämmung zumindest teilweise von der Isoliervorrichtung umgeben, deren Isolierwerkstoff Fasermaterial enthält oder im Wesentlichen als solches ausgebildet ist. Sofern in eine derartige Isoliervorrichtung Wasser eindringt, können in nachteiliger Weise auch Schmutz, Staub, Salz und sonstige Fremdkörper eindringen, wodurch das Isolierverhalten und / oder die Wärmeleitfähigkeit der Isoliervorrichtung ebenso wie die Dauerhaltbarkeit und die Lebensdauer, in welcher die geforderten Isolierwerte einzuhalten sind, in unerwünschter Weise reduziert oder beeinträchtigt werden.

Weiterhin können während des Betriebes in die Isoliervorrichtung bzw. deren Isolierwerkstoff entzündbare flüssige Medien wie Kraftstoffe und Schmiermittel eindringen und sich im Isolierwerkstoff, welcher nachfolgend auch als Isoliermaterial bezeichnet wird, anreichern. Die zumeist ölbasierenden Medien können unter ungünstigen Umständen in Brand geraten und führen dann nicht nur zum Ausfall der Maschinen oder Anlagen sondern darüber hinaus auch zu einer erheblichen Gefährdung von Leib und Leben von Menschen.

Vor diesem Hintergrund ist aus der WO 2012/041 823 A1 bekannt, eine Rohrleitung mit einer Platte zu umgeben, in welche Schlitze eingesägt wurden. Die Platte kann dann als Isoliervorrichtung verwendet und um die Rohrleitung gelegt werden.

Aus der EP 0 428 786 A1 ist eine Anordnung mit einer Isoliervorrichtung bekannt, bei der ein Kohle-Fasermaterial, welches mit einem anorganischen Fasermaterial verbunden ist, einem Motor zugewandt ist.

Hiervon ausgehend liegt der Erfindung die Aufgabe zugrunde, die aufgezeigten Nachteile mit einem geringen Aufwand hinsichtlich Konstruktion und / oder Material in einfacher Weise zu vermeiden und / oder die Wärmedämmung, ebenso wie die Schalldämmung, sicher und dauerhaft zu ermöglichen. Das Herstellverfahren soll problemlos und / oder ohne den Einsatz aufwendiger Verfahrensschritte und / oder Hilfsmittel durchführbar sein. Ferner soll die Isoliervorrichtung ohne Schwierigkeiten sowohl bei der Herstellung als auch bei der Verbindung oder Anordnung mit dem Bauteil handhabbar sein.

Die Lösung dieser Aufgabe erfolgt gemäß den Merkmalen der Patentansprüche 1 und 15. Hinsichtlich des Verfahrens erfolgt die Lösung gemäß den Merkmalen des auf das Verfahren gerichteten Patentanspruchs.

Die erfindungsgemäße Isoliervorrichtung zeichnet sich durch einen einfachen und gleichwohl robusten und / oder hochdauerbeständigen Aufbau aus. Der faserhaltige Isolierwerkstoff enthält eine hydrophobe und / oder oleophobe oder eine hydrophobierende und / oder oleophobierende Ausrüstung in Form eines Bindemittels und ist mittels eines Formgebungsverfahrens als dreidimensionales im Wesentlichen oleo-hydrophobes und / oder ölwasserabweisendes Formteil ausgebildet. Somit ist das Eindringen oder gar eine dauerhafte Aufnahme von Wasser und / oder entzündbaren flüssigen Medien und infolgedessen von Schmutz, Staub, Salz oder sonstigen Fremdkörpern weitestgehend unterbunden. Erfindungsgemäß wird in vorteilhafter Weise eine Erhöhung der Dauerhaltbarkeit erreicht und / oder das Isolierverhalten hinsichtlich Wärmedämmung und / oder Schalldämmung des Isoliermaterials und / oder des Faserformkörpers wird nicht oder zumindest weniger in negativer Weise beeinträchtigt. Gleichzeitig oder alternativ wird das Eindringen oder gar eine dauerhafte Aufnahme von insbesondere ölbasierenden brennbaren Flüssigkeiten bzw. Medien, wie Dieselkraftstoffe, Schmieröle, Hydraulikflüssigkeiten, etc. und infolgedessen die Entstehung von möglichen Brandgefahren durch die Entzündung dieser Flüssigkeiten bzw. Medien weitestgehend unterbunden. Durch das erfindungsgemäße Verfahren erhält die Isoliervorrichtung und / oder der Isolierwerkstoff gleichzeitig eine oleophobe und hydrophobe Eigenschaft. Erfindungsgemäß weisen die Isoliervorrichtung und / oder der Isolierwerkstoff bzw. das Isoliermaterial sowohl oleophobe als auch hydrophobe Eigenschaften auf.

Insbesondere ergeben sich erhebliche Vorteile beim Einsatz in Kraftfahrzeugen, zumal in deren Abgasleitungen und / oder Abgaskrümmern oder Abgasturboladern praktisch kein Wasser während einer Motor-Anlaufphase verdunstet werden muss und mithin ein schnelleres Aufheizverhalten erreicht wird. Durch die oleophobe Ausrüstung oder das oleophobierende Bindemittel, welches in Kombination mit der hydrophoben Ausrüstung oder dem hydrophobierenden Bindemittel zum Einsatz gelangt oder aber allein bzw. alternativ eingesetzt ist, wird in bevorzugter Weise das Eindringen von entzündbaren bzw. leicht brennbaren Medien in den Isolierwerkstoff und / oder die Isoliervorrichtung unterbunden. Des Weiteren ist der Einsatz der erfindungsgemäßen Isoliervorrichtung auf Abgasleitungen und / oder Abgasnachbehandlungssystemen vorteilhaft, da insbesondere in der Anlaufphase ein unerwünschter Wärmeverlust in vorteilhafter Weise vermieden wird und im Ergebnis die erforderliche Betriebstemperatur schneller erreicht wird.

Ferner werden beim Einsatz der Isoliervorrichtung im sogenannten "Cold-End-Bereich", wobei das Bauteil, insbesondere das Abgasrohr, DPF, SCR, Schalldämpfer zumeist am Unterboden der Fahrzeuge angeordnet sind und somit der Einwirkung von Spritzwasser ausgesetzt sind, wesentliche Vorteile durch die hydrophobe Ausbildung erreicht. Weiterhin hat sich die Kombination und / oder der Einsatz in akustischen Isoliersystemen als vorteilhaft erwiesen, welche einen Außenmantel aus einer bevorzugt perforierten Metallfolie, insbesondere Edelstahlfolie, enthalten. Derartige kombinierte Isoliersysteme, bei welchen das hydrophobe und / oder oleophobe Isoliermaterial zur Wärme- und / oder akustischen Dämmung dient und der perforierte Außenmantel zur akustischen Dämmung dient, vermeiden das Eindringen bzw. die Aufnahme von Wasser, wodurch eine erheblich verbesserte Performance und / oder Dauerhaltbarkeit erreicht wird. Des Weiteren werden beim Einsatz der Isoliervorrichtung an allen Motoren, sowohl in Fahrzeugen wie PKW, Nutzfahrzeugen, Schiffen aber auch bei stationären Anwendungen wie z. Bsp. Anlagen zur Stromerzeugung in Kraftwerken oder auf Öl-/Gas-Förderplattformen aufgrund der oleophoben Ausrüstung und dadurch bedingt dem Vermeiden des Eindringens bzw. der Aufnahme von brennbaren Flüssigkeiten, die Risiken der Entstehung von Bränden erheblich reduziert.

Bevorzugt enthält die Ausrüstung und / oder das Bindemittel Silan und / oder Siloxan oder jenes ist auf der Basis von Silanen oder Siloxanen hergestellt. Silane oder Siloxane können problemlos bereitgestellt werden oder stehen ohne Schwierigkeiten zur Verfügung und können in einfacher Weise dem Isolierwerkstoff, welcher Fasermaterial enthält oder aus solchem besteht als Bindemittel und / oder zur Ausrüstung zugegeben werden. Nach Durchführung des Formgebungsverfahrens, insbesondere einem Heißpressverfahren, ist die dreidimensionale Isoliervorrichtung zumindest näherungsweise und / oder im Wesentlichen oleophob und hydrophob, insbesondere derart, dass bis zu einer Daueranwendungstemperatur von 600°C die Wasseraufnahme unterbunden ist und gleichzeitig die Aufnahme von ölbasierenden Medien bis zu einer Daueranwendungstemperatur von 300°C unterbunden ist.

Das Herstellverfahren ist in einfacher Weise und / oder ohne besonderen zusätzlichen Aufwand durchführbar, wobei der zunächst in zweidimensionaler Form bereitgestellte Isolierwerkstoff mit dem oleo-/hydrophobierenden Bindemittel ausgerüstet wird, sei es vor oder nach der Verbindung mit einem ggf. in bevorzugter Weise vorgesehenen zweckmäßig als Metallfolie ausgebildeten Außenmantel. Nachfolgend wird der Isolierwerkstoff bevorzugt gemeinsam mit dem Außenmantel entsprechend den erforderlichen Außenabmessungen der Isoliervorrichtung noch in der zweidimensionalen Form geschnitten. Daraufhin erfolgt mittels einer Verformungsvorrichtung, welche insbesondere als eine Presse ausgebildet ist, die dreidimensionale Formgebung bevorzugt durch oder mittels eines Heißpressverfahrens. Insbesondere wird das Heißpressverfahren in einem Temperaturbereich zwischen 200° bis 500° oder bevorzugt bis 400°C durchgeführt. Die Oleo- und Hydrophobierung und die dreidimensionale Formgebung erfolgt mithin innerhalb dieses in vorteilhafter Weise einheitlichen Fertigungsverfahrens, wobei der Verfahrensschritt zur Ausrüstung mit dem Bindemittel in wirtschaftlicher Weise ohne wesentlichen Aufwand, insbesondere hinsichtlich Zeit und / oder Materialeinsatz, durchgeführt werden kann.

In einer alternativen besonderen Ausgestaltung der Erfindung erfolgt die oleophobe und / oder hydrophobe Ausrüstung oder der Einsatz des oleo- und / oder hydrophoben Bindemittels von zweidimensionalen Zuschnitten mit einem anschließenden Trocknungsprozess und / oder Verfahrensschritt. Weiterhin können im Rahmen der Erfindung die oleo- und / oder hydrophoben zweideimensionalen Zuschnitte in einem nachgeschalteten Fertigungsschritt und / oder einem Zusammenbau analog zu den dreidimensionalen Formteilen, insbesondere mit dem genannten Bauteil verbaut werden.

Das bevorzugt von dem vorgenannten Außenmantel umgebene Isoliermaterial bzw. Isolierwerkstoff weist eine entsprechend den technischen Anforderungen vorgegebene Dicke auf. In bevorzugter Weise ist das Isoliermaterial als Faser-Nadel-Matte ausgebildet bevorzugt aus Silikat- oder Glasfasern, doch können im Rahmen der Erfindung auch andere bekannte Faser-Dämmstoffe vorgesehen sein. Die Dicke des Isoliermaterials ist bevorzugt im Bereich von 3 bis 50 mm in Abhängigkeit von den technischen Erfordernissen vorgegeben, vorteilhaft im Bereich von 3 bis 20 mm oder im Bereich von 20 bis 50 mm. Der bevorzugt als Edelstahlfolie ausgebildete, insbesondere zwecks Schalldämmung gelochte oder ungelochte Außenmantel weist eine vorgegebene Dicke auf. Bevorzugt ist die Dicke mit 0,1 bis 0,3 mm, vorteilhaft von 0,1 bis 0,25 mm und insbesondere im Bereich von 0,13 bis 0,17 mm vorgegeben. Die derart ausgebildete Isoliervorrichtung besitzt zum einen die den Anforderungen entsprechende Steifigkeit und / oder Stabilität und weist zum anderen eine hohe Beständigkeit gegen äußere Einwirkungen auf.

In einer bevorzugten Ausgestaltung der Erfindung besteht oder enthält das Isoliermaterial eine Silikatfasernadelmatte, deren Silikatfasern Faserstärken im Bereich von 6 bis 20 µm, bevorzugt von 6 bis 12 µm liegen. Weiterhin gelangen bevorzugt Silikatfasernadelmatten zur Verwendung mit einer Dichte von zumindest näherungsweise 150 bis 180 kg/m³ und / oder einem Nennflächengewicht von zumindest näherungsweise 3000 bis 3600 g/m^{z}, wobei bevorzugt eine Nenndicke von zumindest näherungsweise 20 mm vorgegeben ist. In einer weiteren bevorzugten Ausgestaltung ist das Isoliermaterial als eine Glasfasernadelmatte ausgebildet, deren Faserstärke überwiegend größer als 5 µm, bevorzugt größer als 6 µm, beträgt, und zwar insbesondere bis 20 µm, bevorzugt 6 bis 12 µm. Die Dichte ist insbesondere im Bereich zwischen 150 bis 200 kg/m³, vorteilhaft im Bereich zwischen 160 bis 180 kg/m³ vorgegeben. Die zum Einsatz gelangenden Glasfasernadelmatten besitzen ein Nennflächengewicht von im Wesentlichen 1600 bis 2100 g/m², bevorzugt bei einer Nenndicke im Bereich von 10 bis 12 mm. Es hat sich gezeigt, dass durch die vorgeschlagene Auswahl des Isoliermaterials die oleo-hydrophobe Ausrüstung und / oder das oleo-hydrophobierende Bindemittel in einfacher Weise optimiert und / oder eingebracht werden können und / oder die Ausbildung als dreidimensionales im wesentlichen oleo- und hydrophobes Formteil zuverlässig und / oder reproduzierbar, vor allem bei Serienfertigung ermöglicht werden.

Ebenso können ohne weiteren größeren technischen Aufwand zweidimensionale oleo- und hydrophobe Formteile durch einen dem Verfahrensschritt zur Ausrüstung mit dem Bindemittel nachgeschalteten Trocknungsprozess dargestellt werden. Insbesondere wird dieser Trocknungsprozess in einem Temperaturbereich zwischen 150° bis 300° oder bevorzugt bis 250°C durchgeführt.

Der Außenmantel weist Mikrostrukturen oder Makrostrukturen auf. Des Weiteren enthält der Außenmantel vorteilhaft Perforationen, insbesondere Mikroperforationen, welche als durchgehende Löcher den Außenmantel durchdringen und über die gesamte Fläche des Außenmantels in vorgegebenen Abständen verteilt und in vorgegebener Anzahl angeordnet sind. Bevorzugt sind 4 bis 40 Perforationen pro cm² vorgesehen. Die Perforationen, welche auch als Einstiche oder Mikroperforationen bezeichnet werden, weisen einen vorgegebenen Lochdurchmesser oder eine vorgegebene Weite auf, bevorzugt im Bereich von 0,2 bis 1,5 mm, bevorzugt zwischen 0,3 bis 0,6 mm, insbesondere 0,4 bis 0,5 mm. Die Perforationen weisen vorteilhaft kreisförmige Querschnitte auf, doch können im Rahmen der Erfindung ferner andere Querschnitte, wie rechteckig, mehreckig, oval oder dergleichen vorgesehen sein. Entsprechend der Größe
des vorgegebenen oder ausgewählten Durchmessers bzw. Weite beträgt die offene Fläche 1 bis 7%, bevorzugt 2 bis 3%, insbesondere zumindest näherungsweise 2%, der Gesamtfläche des Außenmantels.

## Patentansprüche

1. Anordnung, umfassend ein von einem heißen Medium durchströmbares Bauteil und eine Isoliervorrichtung des Bauteils, welche einen Isolierwerkstoff mit oder aus Fasermaterial enthält, wobei die Isoliervorrichtung oder der Isolierwerkstoff das Bauteil zumindest teilweise umgibt, wobei der Isolierwerkstoff eine hydrophobe und/ oder oleophobe Ausrüstung oder ein hydrophobierendes oder hydrophobes und/ oder oleophobierendes Bindemittel enthält, wobei die Isoliervorrichtung mittels eines Formgebungsverfahrens als dreidimensionales hydrophobes und/ oder oleophobes Formteil ausgebildet ist und wobei die Formgebung der Isoliervorrichtung in einem Pressverfahren erfolgt ist,
**dadurch gekennzeichnet, dass** die Isoliervorrichtung und/ oder der Isolierwerkstoff auf ihrer bzw. seiner dem genannten Bauteil abgewandten Außenseite einen abschirmenden Außenmantel aufweist, welcher als eine Metallfolie ausgebildet ist und dass der Außenmantel als eine strukturierte Metallfolie mit Makro- oder Mikrostrukturen ausgebildet ist.

2. Anordnung nach Anspruch 1, **dadurch gekennzeichnet, dass** der Isolierwerkstoff eine oleophobe und hydrophobe Ausrüstung oder ein oleo- und hydrophobierendes Bindemittel enthält und dass die Isoliervorrichtung mittels eines Formgebungsverfahrens als dreidimensionales oleo- und hydrophobes Formteil ausgebildet ist.

3. Anordnung nach Anspruch 1 oder 2, **dadurch gekennzeichnet, dass** das Bindemittel Silane und/ oder Siloxane enthält oder dass das Bindemittel auf der Basis von Silan oder Siloxan hergestellt ist.

4. Anordnung nach einem der Ansprüche 1 bis 3, **dadurch gekennzeichnet, dass** die Formgebung der Isoliervorrichtung in einem Heißpressverfahren in einem Temperaturbereich zwischen 200 °C bis 500 °C oder zwischen 200 °C bis 400 °C erfolgt ist.

5. Anordnung nach einem der Ansprüche 1 bis 4, **dadurch gekennzeichnet, dass** der Isolierwerkstoff als Faser-Nadel-Matte ausgebildet ist und/ oder dass der Isolierwerkstoff aus Silikat- oder Glasfasern besteht oder solche enthält,

6. Anordnung nach einem der voranstehenden Ansprüche, **dadurch gekennzeichnet, dass** der Isolierwerkstoff eine Dicke im Bereich von 3 bis 50 mm oder im Bereich von 3 bis 20 mm oder im Bereich von 20 bis 50 mm aufweist.

7. Anordnung nach einem der voranstehenden Ansprüche, **dadurch gekennzeichnet, dass** der Außenmantel als eine Edelstahlfolie ausgebildet ist.

8. Anordnung nach einem der voranstehenden Ansprüche, **dadurch gekennzeichnet, dass** der Außenmantel mittels Perforationen perforiert ist.

9. Anordnung nach Anspruch 8, **dadurch gekennzeichnet, dass** die Perforationen, die als Löcher oder Einstiche ausgebildet sind, Durchmesser oder Weiten im Bereich von 0,2 bis 1,5 mm oder im Bereich von 0,3 bis 0,6 mm oder im Bereich von 0,4 bis 0,5 mm aufweisen.

10. Anordnung nach einem der voranstehenden Ansprüche, **dadurch gekennzeichnet, dass** pro cm² der Fläche des Außenmantels 4 bis 40 oder 10 bis 30 oder 20 Löcher oder Einstiche vorgesehen sind.

11. Anordnung nach einem der Ansprüche 8 bis 10, **dadurch gekennzeichnet, dass** der Außenmantel infolge der Perforationen oder Löcher eine offene Fläche von 1 bis 7% oder 2 bis 3% oder 2% aufweist.

12. Anordnung nach einem der voranstehenden Ansprüche, **dadurch gekennzeichnet, dass** der Außenmantel eine Dicke aufweist, welche im Bereich von 0,1 bis 0,25 mm oder 0,15 mm vorgegeben ist.

13. Verfahren zur Herstellung einer Isoliervorrichtung einer Anordnung nach einem der voranstehenden Ansprüche,
**dadurch gekennzeichnet, dass**
der Zuschnitt des Isolierwerkstoffs in zweidimensionaler Form erfolgt, wobei vor oder nach dem Zuschnitt die Ausrüstung des Isolierwerkstoffs mit einem oleo- und hydrophierenden Bindemittel durchgeführt wird, wobei nachfolgend die Isoliervorrichtung mittels einer Presse zu einem dreidimensionalen oleo- und hydrophoben Formteil verformt wird.

14. Verfahren nach Anspruch 13, **dadurch gekennzeichnet, dass** die Formgebung mittels eines Heißpressverfahrens durchgeführt wird, in einem Temperaturbereich zwischen 200 °C bis 500 °C oder zwischen 200 °C und 400 °C.

15. Isoliervorrichtung für eine Anordnung nach einem der Ansprüche 1 bis 12, welche einen Isolierwerkstoff mit oder aus Fasermaterial enthält, wobei der Isolierwerkstoff eine hydrophobe und/ oder oleophobe Ausrüstung oder ein hydrophobierendes oder hydrophobes und/ oder oleophobierendes Bindemittel enthält, wobei die Isoliervorrichtung mittels eines Formgebungsverfahrens als dreidimensionales hydrophobes und/ oder oleophobes Formteil ausgebildet ist, wobei die Formgebung der Isoliervorrichtung in einem Pressverfahren erfolgt ist, wobei die Isoliervorrichtung und/ oder der Isolierwerkstoff auf ihrer bzw. seiner dem genannten Bauteil abgewandten Außenseite einen abschirmenden Außenmantel aufweist, welcher als eine Metallfolie ausgebildet ist und wobei der Außenmantel als eine strukturierte Metallfolie mit Makro- oder Mikrostrukturen ausgebildet ist.

## Claims

1. A device comprising a component, through which a hot medium can flow, and an insulating device of the component which contains an insulating material with or made of fibre material, wherein the insulating device or the insulating material at least partially surrounds the component, wherein the insulating material contains a hydrophobic and/or oleophobic finish or a hydrophobing or hydrophobic and/or oleophobing binding agent, wherein the insulating device is produced by means of a shaping process as a three-dimensional hydrophobic and/or oleophobic shaped part and wherein the shaping of the insulating device has taken place in a pressing process,
**characterised in that** on its outer side facing away from said component the insulating device and/or the insulating material has a shielding outer sheath in the form of a metal foil and **in that** the outer sheath is designed as a structured metal foil with macro- or micro-structures.

2. The device according to claim 1, **characterised in that** the insulating material contains an oleophobic and hydrophobic finish or an oleophobing and hydrophobing binding agent and **in that** the insulating device is produced by means of a shaping process as a three-dimensional oleophobic and hydrophobic shaped part.

3. The device according to claim 1 or 2, **characterised in that** the binding agent contains silane and/or siloxane or **in that** the binding agent is produced on the basis of silane or siloxane.

4. The device according to any one of claims 1 to 3, **characterised in that** the shaping of the insulating device has taken place in a hot pressing process in a temperature range of between 200 °C to 500 °C or between 200 °C to 400 °C.

5. The device according to any one of claims 1 to 4, **characterised in that** the insulating material is designed as a fibre needle mat and/or **in that** the insulating material consists of or contains silicate or glass fibres.

6. The device according to any one of the preceding claims, **characterised in that** the insulating material has a thickness in the range 3 to 50 mm or in the range 3 to 20 mm or in the range 20 to 50 mm.

7. The device according to any one of the preceding claims, **characterised in that** the outer sheath is designed as a stainless steel foil.

8. The device according to any one of the preceding claims, **characterised in that** the outer sheath is perforated by way of perforations.

9. The device according to claim 8, **characterised in that** the perforations, which are in the form of holes or punctures, have diameters or widths in the range 0.2 to 1.5 mm or in the range 0.3 to 0.6 mm or in the range 0.4 to 0.5 mm.

10. The device according to any one of the preceding claims, **characterised in that** per cm² of the surface area of the outer sheath 4 to 40 or 10 to 30 or 20 holes or punctures are provided.

11. The device according to any one of claims 8 to 10, **characterised in that** as a consequence of the perforations or holes the outer sheath has an open surface area of 1 to 7 % or 2 to 3 % or 2 %.

12. The device according to any one of the preceding claims, **characterised in that** the outer sheath has a thickness which is specified in the range 0.1 to 0.25 mm or 0.15 mm.

13. A method of producing an insulating device of a device according to any one of the preceding claims,
**characterised in that**
the pre-cutting of the insulating material takes place in two-dimensional form,
wherein before or after the pre-cutting finishing of the insulating material with an oleophobing and hydrophobing binding agent is carried out,
wherein subsequently the insulating device is shaped by means of a press into a three-dimensional oleophobic and hydrophobic shaped part.

14. The method according to claim 13, **characterised in that** the shaping is carried out by means of a hot pressing process in a temperature range between 200 °C to 500 °C or between 200 °C and 400 °C.

15. An insulating device for a device according to any one of claims 1 to 12 which contains an insulating material with or made of fibre material,
wherein the insulating material contains a hydrophobic and/or oleophobic finish or a hydrophobing or hydrophobic and/or oleophobing binding agent,
wherein the insulating device is produced by means of a shaping process as a three-dimensional hydrophobic and/or oleophobic shaped part, wherein the shaping of the insulating device has taken place in a pressing process, wherein on its outer side facing away from said component the insulating device and/or the insulating material has a shielding outer sheath in the form of a metal foil and wherein the outer sheath is designed as a structured metal foil with macro- or micro-structures.

## Revendications

1. Système, comprenant un composant pouvant être traversé par un milieu chaud et un dispositif d'isolation du composant, lequel contient un matériau d'isolation avec ou en matériau de fibres, sachant que le dispositif d'isolation ou le matériau d'isolation entoure au moins en partie le composant, sachant que le matériau d'isolation contient un équipement hydrophobe et/ou oléophobe ou un liant hydrophobant ou hydrophobe et/ou oléophobant, sachant que le dispositif d'isolation est constitué au moyen d'un procédé de moulage sous la forme d'une pièce moulée tridimensionnelle hydrophobe et/ou oléophobe et sachant que le moulage du dispositif d'isolation est réalisé dans un procédé de pressage,
**caractérisé en ce que** le dispositif d'isolation et/ou le matériau d'isolation comporte sur sa face extérieure opposée au composant cité une enveloppe extérieure protectrice, laquelle est constituée sous la forme d'une feuille métallique et **en ce que** l'enveloppe extérieure est constituée sous la forme d'une feuille métallique structurée avec des macro- ou microstructures.

2. Système selon la revendication 1, **caractérisé en ce que** le matériau d'isolation contient un équipement oléophobe et hydrophobe ou un liant oléo- et hydrophobant et **en ce que** le dispositif d'isolation est constitué au moyen d'un procédé de moulage sous la forme d'une pièce moulée tridimensionnelle oléo- et hydrophobe.

3. Système selon la revendication 1 ou 2, **caractérisé en ce que** le liant contient du silane et/ou du siloxane ou **en ce que** le liant est fabriqué à base de silane ou de siloxane.

4. Système selon l'une quelconque des revendications précédentes 1 à 3, **caractérisé en ce que** le moulage du dispositif d'isolation est réalisé dans un procédé de pressage à chaud dans une plage de températures se situant entre 200 °C à 500 °C ou entre 200 °C à 400 °C.

5. Système selon l'une quelconque des revendications 1 à 4, **caractérisé en ce que** le matériau d'isolation est constitué sous la forme d'une natte fibres-aiguilles et/ou **en ce que** le matériau d'isolation est composé de fibres de silicate ou de verre ou contient des éléments analogues.

6. Système selon l'une quelconque des revendications précédentes, **caractérisé en ce que** le matériau d'isolation comporte une épaisseur se situant dans une plage de 3 à 50 mm ou dans une plage de 3 à 20 mm ou dans une plage de 20 à 50 mm.

7. Système selon l'une quelconque des revendications précédentes, **caractérisé en ce que** l'enveloppe extérieure est constituée sous la forme d'une feuille en acier spécial.

8. Système selon l'une quelconque des revendications précédentes, **caractérisé en ce que** l'enveloppe extérieure est perforée au moyen de perforations.

9. Système selon la revendication 8, **caractérisé en ce que** les perforations, qui sont constituées sous la forme de trous ou d'encoches, comportent des diamètres ou des largeurs dans une plage de 0,2 à 1,5 mm ou dans une plage de 0,3 à 0,6 mm ou dans une plage de 0,4 à 0,5 mm.

10. Système selon l'une quelconque des revendications précédentes, **caractérisé en ce que** 4 à 40 ou 10 à 30 ou 20 trous ou encoches sont prévus par cm² de surface de l'enveloppe extérieure.

11. Système selon l'une quelconque des revendications 8 à 10, **caractérisé en ce que** l'enveloppe extérieure comporte une surface ouverte de 1 à 7 % ou de 2 à 3 % ou 2 % en raison de perforations ou de trous.

12. Système selon l'une quelconque des revendications précédentes, **caractérisé en ce que** l'enveloppe extérieure comporte une épaisseur, laquelle est prédéfinie dans une plage de 0,1 à 0,25 mm ou 0,15 mm.

13. Procédé de fabrication d'un dispositif d'isolation d'un système selon l'une quelconque des revendications précédentes,
**caractérisé en ce que**
la découpe du matériau d'isolation a lieu dans un moule bidimensionnel,
sachant que l'équipement du matériau d'isolation avec un liant oléo- et hydrophobant est exécuté avant ou après la découpe,
sachant qu'ensuite, le dispositif d'isolation est déformé au moyen d'une presse en une pièce moulée tridimensionnelle oléo- et hydrophobe.

14. Procédé selon la revendication 13, **caractérisé en ce que** le moulage est exécuté au moyen d'un procédé de pressage à chaud dans une plage de températures se situant entre 200 °C à 500 °C ou entre 200 °C et 400 °C.

15. Dispositif d'isolation pour un système selon l'une quelconque des revendications 1 à 12, lequel contient un matériau d'isolation avec ou en matériau à fibres, sachant que le matériau d'isolation contient un équipement hydrophobe et/ou oléophobe ou un liant hydrophobant ou hydrophobe et/ou oléophobant, sachant que le dispositif d'isolation est constitué au moyen d'un procédé de formage sous la forme d'une pièce moulée tridimensionnelle hydrophobe et/ou oléophobe, sachant que le moulage du dispositif d'isolation est réalisé dans un procédé de pressage, sachant que le dispositif d'isolation et/ou le matériau d'isolation comporte sur sa face extérieure opposée au composant cité une enveloppe extérieure protectrice, laquelle est constituée sous la forme d'une feuille métallique et sachant que l'enveloppe extérieure est constituée sous la forme d'une feuille métallique structurée avec des macro- ou microstructures.
